(19) **Europäisches Patentamt**

**European Patent Office**

**Office européen des brevets**

(11) **EP 0 908 433 B1**

(12) **FASCICULE DE BREVET EUROPEEN**

(45) Date de publication et mention
de la délivrance du brevet:
**12.09.2001 Bulletin 2001/37**

(51) Int Cl.⁷: $C05G\ 3/00$, $B01J\ 2/30$

(21) Numéro de dépôt: **98402448.9**

(22) Date de dépôt: **06.10.1998**

(54) **Compositions de traitement antimottant et antipoussière pour engrais**

Zusammensetzung zum Behandeln von Düngern zur Verhinderung des Zusammenbackens und der Staubemissionen

Composition for treating fertilizers in order to avoid cacking and dust emissions

(84) Etats contractants désignés:
**AT BE DE DK ES FR GB GR IT NL PT**

(30) Priorité: **10.10.1997 FR 9712696**

(43) Date de publication de la demande:
**14.04.1999 Bulletin 1999/15**

(73) Titulaire: **CECA S.A.**
**92800 Puteaux (FR)**

(72) Inventeurs:
• **Navascues, Luc**
**75011 Paris (FR)**

• **Renard, René**
**95310 Saint Ouen l'Aumone (FR)**
• **Lefebvre, Jean-Claude**
**93000 Bobigny (FR)**

(74) Mandataire: **Haicour, Philippe**
**Elf Atochem S.A.,**
**Departement Propriété Industrielle,**
**Cours Michelet-La Défense 10**
**92091 Paris La Défense Cédex (FR)**

(56) Documents cités:
EP-A- 0 574 306       EP-A- 0 715 884
EP-A- 0 768 287       EP-A- 0 813 902
WO-A-93/16793

## Description

Le domaine de l'invention est celui des engrais azotés. L'invention concerne plus particulièrement le traitement d'engrais granulés de ce type en vue de limiter leur tendance au mottage et à l'émission de poussière.

Les engrais granulés à usage agricole sont constitués de nitrate d'ammonium et, pour raisons de sécurité, d'un inerte, généralement du carbonate de calcium, destiné à abaisser le taux d'azote de 35 à 33,5, 27 % voire 22 %. Ils ont une tendance fâcheuse à se prendre en masse lors de leur stockage en petites unités de conditionnement, à reprendre de l'eau lors de leur stockage à l'air libre, à perdre une partie de leur fluidité à la reprise, et à émettre des poussières lors de leur manutention. Différents remèdes y ont été apportés, qui consistent à enrober les grains avec des cires, des huiles et des tensioactifs dont les plus utilisés sont les monoamines grasses à chaîne suif, ainsi qu'avec diverses combinaisons de ces ingrédients entre eux et avec d'autres substances réputées synergiques. C'est ainsi qu'on a proposé (FR A-2 692 166) l'hydrophobation des ammonitrates à l'aide de compositions hydrophobantes amines grasses / alcool gras / cire / huile, et qu'on a tenté de leur transposer une méthode de traitement antipoussière des engrais composés (FR A-2 727 326) qui fait appel à des compositions cireuses comportant des mélanges de monoamines de suif primaires et secondaires. Ces traitements ne sont pas entièrement satisfaisants.

La présente invention apporte une meilleure solution au traitement antimottant et antipoussière des ammonitrates granulés avec des compositions comportant, en proportions pondérales, de 10 à 25 % d'un mélange de monoamines grasses primaires et secondaires, dans lequel la proportion d'amines secondaires est de 25 à 75 %, de 2 à 8 % de stéarate d'aluminium, de 2 à 8 % d'alcool gras, le complément à 100 % étant constitué des ingrédients ordinaires dans la préparation des agents antimottants ou antipoussières, à savoir des cires macro- ou microcristallines, des huiles, le cas échéant des poudres inertes.

Dans ces compositions, les amines grasses sont des amines avec des chaînes alkyles ou alkylènes comportant un nombre de carbones de 14 à 20. On préfère les amines qui dérivent des acides gras de suif hydrogéné et qui par conséquent ont une chaîne carbonée qui en a la longueur et la structure, et qu'on dénommera ici amines de suif hydrogéné ou amines SH. Les alcools gras des formules de l'invention sont les alcools primaires à chaîne alkyle ou alkylène comportant de 10 à 24 atomes de carbone, comme par exemple l'alcool octadécylique (stéarylique), l'alcool arachidique, l'alcool béhénique.

Les compositions selon l'invention se préparent très simplement par dissolution ou dispersion de leurs différents constituants dans l'ingrédient huileux, en procédant à chaud vers 80°C et sous agitation jusqu'à l'obtention d'un mélange homogène. Elles se présentent à froid généralement sous un aspect pâteux. On les applique à l'état fondu, par pulvérisation vers 80°C, sur l'engrais à traiter qui a été préalablement chargé à température ambiante dans un tambour enrobeur rotatif. La pulvérisation est effectuée préférentiellement par un système de pulvérisation à l'air. Le temps de séjour de l'engrais dans le tambour enrobeur est prolongé encore une minute environ pour une meilleure homogénéisation de l'enrobage. Les quantités déposées sont généralement comprises entre 0,5 Kg/t et 5 Kg/t d'engrais. Ce sont là des conditions tout à fait classiques, bien connues de l'homme de l'art. Les ammonitrates agricoles traités dans ces conditions avec les compositions nouvelles de l'invention sont également des objets de l'invention.

EXEMPLE

On a illustré l'invention par comparaison d'échantillons d'ammonitrate granulé, déconcentré au carbonate de calcium et titrant 27 % d'azote, ayant subi un traitement par enrobage avec diverses formulations selon l'invention ou selon l'art antérieur, au dosage uniforme de 1 %.

Les échantillons sont repérés comme suit,

| Echantillon | 1 | 2 | 3 | 4 | 5 | 6 |
|---|---|---|---|---|---|---|
| Observation | Selon l'invention | Pauvre en amine secondaire | Pauvre en stéarate | Pauvre en alcool gras | Sans amine primaire | Trop riche en stéarate |
| Composition | | | | | | |
| Amine SH | 130 | 170 | 130 | 130 | - | 130 |
| Amine 2SH | 70 | 30 | 70 | 70 | 200 | 70 |
| Stéarate d'Al | 40 | 40 | 10 | 40 | 40 | 100 |
| Alcool gras | 40 | 40 | 40 | 10 | 40 | 40 |
| Cire/huile | QSP 1000 | QSP 1000 | QSP 1000 | QSP 1000 | QSP 1000 | QSP 1000 |

Dans ces compositions, l'amine primaire SH est la monoamine primaire (monoalkyle) de suif hydrogéné Noram®SH de CECA S.A., l'amine secondaire 2SH est la monoamine secondaire (dialkyle) de suif hydrogéné Noram®2SH de CECA S.A., le stéarate d'aluminium est l'Alugel DF/HE de la Société Barlocher, l'alcool gras est l'alcool stéarylique NACOL®18-94 de CONDEA, et le système cire/huile est représenté par 30 % de cire paraffinique microcristalline brute (Cire H de Total) et 70 % d'huile (Protex RPO de MOBIL).

Les tendances au mottage sont appréciées grâce au test qui consiste à conditionner les granulés d'engrais par exposition plus ou moins prolongée à une atmosphère d'humidité relative supérieure à l'humidité relative critique de l'engrais pendant des durées variables, puis à en former des éprouvettes cylindriques par compression statique et à en mesurer la cohésion pour une densité apparente donnée.

a) Conditionnement

Le conditionnement de l'engrais est effectué dans les conditions suivantes :

- température : 20°C
- humidité relative : 75 %
- durée : 0 à 1 heure

b) Confection des éprouvettes

Les éprouvettes sont confectionnées avec 140 g d'engrais, dans des moules dont le diamètre intérieur est de 5 cm, la pression de moulage étant de 10 bars, appliquée durant 16 heures.

c) Mesures

On observe que la densité apparente et la résistance à la rupture des éprouvettes varient avec la durée du conditionnement. On définit un indice de mottage (IM) par la relation :

$$IM = \delta R/\delta d$$

dans laquelle $\delta d$ est la différence de densité apparente entre deux éprouvettes conditionnées pendant des durées différentes, et $\delta R$ est la différence de résistance à la rupture de ces deux éprouvettes.

La densité apparente (d) est déterminée à partir de la mesure de la hauteur de l'éprouvette cylindrique dont le diamètre constant est connu.

La cohésion (R) est prise comme la résistance à la rupture en traction, obtenue elle-même à partir de la mesure de la résistance à la compression diamétrale, d'après la relation :

$$R = 2.F/p. (f.h)$$

dans laquelle

F est la force de compression appliquée à la rupture,
h est la hauteur de l'éprouvette,
f est le diamètre de l'éprouvette.

Les mesures de résistance à la compression sont effectuées à l'aide d'un dynamomètre, à la vitesse d'avancement de 30 mm/min.

d) Interprétation des résultats

Le rapport entre l'indice de mottage de l'engrais traité (IM) et l'indice de mottage témoin ($IM_o$) de l'engrais non traité définit l'indice relatif de mottage (IRM) :

$$(IRM) = (IM) / (IMo)$$

grâce auquel on peut estimer le niveau de protection apporté par le traitement d'antimottage selon un pourcentage de protection $P_M(\%)$

$$P_M(\%) = 100\,[1 - (IRM)]$$

On admet que l'engrais présente un comportement satisfaisant lorsque son indice relatif de mottage IRM est inférieur à 0,25, c'est-à-dire qu'on a obtenu une protection PM supérieure ou égale à 75 %.

Les tendances à l'émission de poussières sont estimées selon le test tel que décrit ci-après.

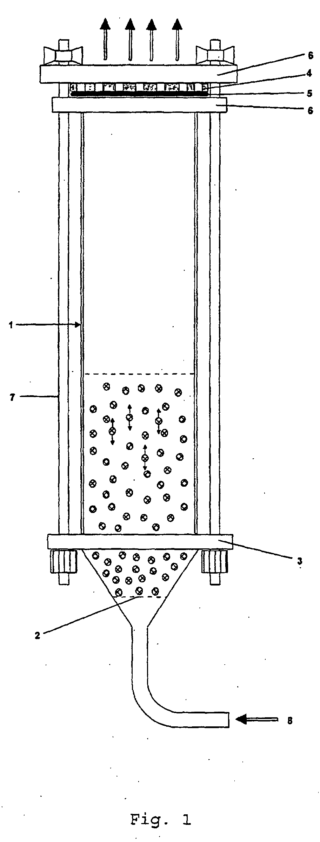

Les grains d'engrais, préalablement conditionnés par maintien à 50°C et à 50 % d'humidité relative pendant 30 minutes, sont placés dans une colonne de verre et y sont soumis à un courant d'air ascendant. Les poussières entraînées par le flux gazeux sont retenues sur un filtre en papier, lequel est pesé avant et après soufflage. L'appareillage (fig. 1) est constitué par un manchon de verre ①, cylindre de 30 cm de haut, de diamètre intérieur 9 cm, emboîté sur un fond conique muni d'une grille ②et se terminant par un ajutage d'admission d'air comprimé, coiffé d'un disque perforé ④porteur d'un disque de papier filtre ⑤, le tout maintenu par des brides ③et ⑥au moyen de tiges filetées à vis papillon ⑦. Le système est alimenté en air comprimé en ⑧ La prise d'essai est de 100 grammes. Le papier filtre est de qualité filtration ultra-rapide sans cendres. Le débit d'air sec est réglé par manomètre de façon à obtenir la fluidisation du lit d'engrais sur une hauteur d'environ 10 cm. Le temps de soufflage est de 4 minutes. On exprime le taux de poussières en mg/100 g d'engrais, par la différence de poids du filtre après et avant soufflage. L'expérience du test et de sa correspondance avec l'empoussièrement sur le terrain conduit à rejeter les engrais donnant plus de 50 mg de poussières pour 100 grammes de granulés.

Les résultats obtenus sont consignés dans le tableau ci-après.

| Echantillon | 1 | 2 | 3 | 4 | 5 |
|---|---|---|---|---|---|
| % protection | 80 | 80 | 65 | 75 | 40 |
| Poussières | 40 | 80 | 40 | 70 | 40 |

La composition 6, envisagée plus haut, riche en stéarate n'a pas été reprise au tableau, du fait de l'obstacle à sa préparation que représente la lenteur de dissolution du stéarate dans la formulation à ce niveau de concentration (10 % de la composition), ce qui lui ôte son intérêt industriel.

Ces résultats parlent d'eux-mêmes en faveur de la composition de l'invention qui réalise un difficile équilibre entre la recherche d'un empoussièrement et d'un mottage minimum, et qui en outre est très facile à préparer.

**Revendications**

1. Compositions pour le traitement antimottant et antipoussière d'ammonitrates agricoles, constituées (pourcentages pondéraux)

   de 10 à 25 % d'un mélange de monoamines grasses primaires et secondaires, dans lequel la proportion d'amines secondaires est de 25 à 75 %,
   de 2 à 8 % de stéarate d'aluminium,
   de 2 à 8 % d'alcool gras,
   le complément à 100 % étant constitué des ingrédients ordinaires dans la préparation des agents antimottants ou antipoussières.

2. Compositions selon la revendication 1 dans lesquelles les amines grasses sont des amines avec des chaînes alkyles ou alkylènes comportant un nombre de carbones de 14 à 20.

3. Compositions selon la revendication 1 dans lesquelles les amines grasses sont des amines de suif hydrogéné.

4. Compositions selon la revendication 1 dans lesquelles les alcools gras sont des alcools primaires à chaîne alkyle ou alkylène comportant de 10 à 24 atomes de carbone.

5. Compositions selon la revendication 1 dans lesquelles l'alcool gras est l'alcool octadécylique.

6. Engrais d'ammonitrate agricoles traités à raison de 0,5 Kg/t et 5 Kg/t avec les compositions selon les revendications 1 à 5.

**Claims**

1. Compositions for the anticaking and dust-preventing treatment of agricultural ammonium nitrates composed (percentages by weight)

   of 10 to 25% of a mixture of primary and secondary fatty monoamines, in which the proportion of secondary amines is from 25 to 75%,
   of 2 to 8% of aluminium stearate,
   of 2 to 8% of fatty alcohol,
   the remainder to 100% being composed of the usual ingredients in the preparation of anticaking or dust-preventing agents.

2. Compositions according to Claim 1, in which the fatty amines are amines with alkyl or alkylene chains containing a number of carbons from 14 to 20.

3. Compositions according to Claim 1, in which the fatty amines are hydrogenated tallow amines.

4. Compositions according to Claim 1, in which the fatty alcohols are primary alcohols with an alkyl or alkylene chain containing from 10 to 24 carbon atoms.

5. Compositions according to Claim 1, in which the fatty alcohol is octadecyl alcohol.

6. Agricultural ammonium nitrate fertilizers treated in the proportion of 0.5 kg/t to 5 kg/t with the compositions according to Claims 1 to 5.

**Patentansprüche**

1. Zusammensetzungen für die Behandlung von landwirtschaftlichen Ammonsalpetern gegen das Zusammenbacken und gegen Staubentwicklung, wobei diese Zusammensetzungen aus (in Gew.-%)

   10 bis 25% einer Mischung aus primären und sekundären Fettmonoaminen, bei denen der Gehalt an sekundären Aminen 25 bis 75% beträgt,
   2 bis 8% Aluminiumstearat,
   2 bis 8% Fettalkohol bestehen,
   und wobei sich der Rest auf 100% aus üblichen Bestandteilen zur Herstellung von Mitteln gegen das Zusammenbacken oder gegen die Staubentwicklung zusammensetzt.

2. Zusammensetzungen nach Anspruch 1, in denen die Fettamine Amine mit Alkyl- oder Alkylenketten mit einer Kohlenstoffzahl von 14 bis 20 sind.

3. Zusammensetzungen nach Anspruch 1, bei denen die Fettamine Amine von hydriertem Talg sind.

4. Zusammensetzungen nach Anspruch 1, bei denen die Fettalkohole primäre Alkohole mit einer Alkyl- oder Alkylenkette mit 10 bis 24 Kohlenstoffatomen sind.

5. Zusammensetzungen nach Anspruch 1, bei denen der Fettalkohol Octadecylalkohol ist.

6. Landwirtschaftliche Ammonsalpeterdünger, die mit 0,5 kg/t bis 5 kg/t der Zusammensetzungen nach Ansprüchen 1 bis 5 behandelt sind.

Fig. 1